Europäisches Patentamt

European Patent Office

Office européen des brevets

(11) Veröffentlichungsnummer: **0 416 405 A1**

# EUROPÄISCHE PATENTANMELDUNG

(21) Anmeldenummer: 90116307.1

(22) Anmeldetag: 25.08.90

(51) Int. Cl.5: **C08L 1/26**, C09J 101/26

(30) Priorität: 05.09.89 DE 3929400

(43) Veröffentlichungstag der Anmeldung:
13.03.91 Patentblatt 91/11

(84) Benannte Vertragsstaaten:
BE DE FR GB IT NL SE

(71) Anmelder: Wolff Walsrode Aktiengesellschaft
Postfach
W-3030 Walsrode 1(DE)

(72) Erfinder: Kniewske, Reinhard, Dr.
An der Lehmhorst 6a
W-3032 Fallingbostel(DE)
Erfinder: Reinhardt, Eugen
Geibelstrasse 47
W-3030 Walsrode(DE)

(74) Vertreter: Zobel, Manfred, Dr. et al
c/o BAYER AG Konzernverwaltung RP
Patente Konzern
W-5090 Leverkusen 1 Bayerwerk(DE)

(54) Neue Celluloseether-Zusammensetzungen für wässrige Medien.

(57) Celluloseether-Zusammensetzungen auf der Basis schnelllöslicher, pulverförmiger, wasserlöslicher Celluloseether enthalten zur Vermeidung der Klumpenbildung beim Auflösen quellbare und saugaktive Superabsorber. Die Celluloseether-Zusammensetzungen können unter Beibehaltung der Schnelllöslichkeit in klumpenfrei auflösbare Preßformen überführt werden.

# NEUE CELLULOSEETHER-ZUSAMMENSETZUNGEN FÜR WÄSSRIGE MEDIEN

Die vorliegende Erfindung betrifft neue Celluloseether-Zusammensetzungen für wäßrige Medien, die dadurch gekennzeichnet sind, daß pulverförmige Celluloseether mit gegebenenfalls weiteren Hilfs- und Zusatzstoffen quell-und saugstarke Superabsorber enthalten.

Celluloseether-Zusammensetzungen werden in verschiedenen Anwendungsbereichen, wie z.B. der Bauindustrie, keramischen Industrie, Ölindustrie, in Kosmetik, Pharmazie, Waschmitteln, Textilindustrie und anderen mehr, eingesetzt. In vielen dieser Bereiche ist es notwendig, die in trockener Form vorliegenden Celluloseether-Zusammensetzungen möglichst schnell zu lösen. Dies bedingt häufig eine Applikation der Celluloseether-Zusammensetzung als schnellösliche und sehr feine Pulver, verbunden mit dem Nachteil einer verstärkten Staubentwicklung und Klumpenbildung bei der Einarbeitung in wäßrige Systeme. Diese ernstzunehmenden Probleme treten vorwiegend bei der Zubereitung von Bauwerkstoffen, aber auch bei der Herstellung schnelllöslicher Kleister auf.

In DE-A-31 03 338 ist ein Verfahren beschrieben, das es gestattet, schnelllöslichen Kleister auf der Basis pulverförmiger Celluloseether herzustellen. Dabei werden die pulverförmigen, gegebenenfalls teilvernetzten Celluloseether unter Wasserzusatz in einer Granuliereinrichtung in ein Granulat überführt. Zur Konfektionierung können diese speziell granulierten Celluloseether durch einen Preßvorgang in Tabletten-, Brikett-, Nadel-, Strang- oder Pelletform überführt werden. Wie in DE-A-31 03 338 beschrieben ist, muß der Preßdruck sorgfältig ausgewählt werden, um einerseits mechanisch stabile Körper zu erhalten, andererseits die Porenstruktur des Feingranulats aber nicht zu zerstören und die Schnelllöslichkeit nicht zu gefährden.

Der Erfindung lag die Aufgabe zugrunde, schnellösliche Celluloseether-Zusammensetzungen bereitzustellen, die auch ohne Granulierung ein klumpenfreies und problemloses Auflöseverhalten besitzen.

Gegenstand der Erfindung ist eine Celluloseether-Zusammensetzung, dadurch gekennzeichnet, daß die Zusammensetzung wenigstens einen Celluloseether und wenigstens einen Superabsorber enthält.

Unter einem Superabsorber wird ein Produkt verstanden, welches eine hohe Absorptionskapazität für Wasser und eine hohe Saugeigenschaft für Wasser aufweist. Bevorzugte Superabsorber haben

a) eine Wasseraufnahmekapazität von wenigstens 50 g pro g, insbesondere wenigstens 100 g pro g unter den unten angegebenen Bedingungen,

b) eine Saugkraft von wenigstens 20 g pro g, insbesondere wenigstens 25 g pro g unter den unten angegebenen Bedingungen nach 5 Minuten und

c) eine Wasseraufnahmegeschwindigkeit in destilliertem Wasser bei Raumtemperatur von:
- nach 30 s mindestens 8 g/g,
- nach 60 s mindestens 13 g/g
- nach 120 s mindestens 20 g/g.

| Methode | Durchführung |
| --- | --- |
| Wasseraufnahme-Kapazität | 1. Absorbens 60 min in ca. 70 ml Flüssigkeit quellen lassen Einwaage: 150 mg in entionisiertem Wasser<br>2. 1 h Zentrifugation bei 4000 Upm (Labofuge).<br>3. Abtrennen Solanteil, Auswaage Gelanteil nach Abtupfen mit Zellstofftuch.<br>4. Berechnung der Wasseraufnahmekapazität (WA):<br><br>$$WA = \frac{\text{Gewicht Gelanteil in g}}{\text{Produkteinwaage in g}}$$ |
| Saugkraft | 1. 150 mg Produkt werden auf eine G3-Fritte gestreut (Abb. 1), die bis zur Oberkante der porösen Matrix mit entionisiertem Wasser gefüllt ist.<br>2. Das Produkt saugt gegen den hydrostatischen Druck die Flüssigkeit an und quillt auf.<br>3. Die Menge absorbierter Flüssigkeit läßt sich an der Graduierung der Pipette ablesen.<br>4. Berechnung der Saugkraft (SK) zur Zeit t:<br><br>$$SK_t \quad \frac{\text{ml absorbierte Flüssigkeit}}{\text{g Produkteinwaage}}$$ |

EP 0 416 405 A1

Die in den erfindungsgemäßen Celluloseether-Zusammensetzungen einsetzbaren Superabsorber sind überwiegend wasserunlösliche, polymere Stoffe, die beim Kontakt mit wäßrigen Flüssigkeiten quellen. Der Quellvorgang wird durch eine polymere Netzwerk- oder Pfropfstruktur bestimmt.

Unter Superabsorbern werden vorzugsweise Polymere mit folgender chemischer Zusammensetzung verstanden:

vollsynthetisch:
* vernetzte Polyacrylate
* Polyvinylacetat-Acrylsäure-Copolymere
* Polyvinylalkohol-Copolymere
* Polyethylenoxid
* Isobutylen-Maleinsäure-Copolymere
* hydrolysiertes Polyacrylnitril

halbsynthetisch:
* Stärke-Polyacrylat-Pfropfcopolymere
* hydrolysierte Stärke-Polyacrylnitril-Pfropfcopolymere
* Carboxymethylcellulose

natürlich:
* Alginat

Bevorzugt sind als Superabsorber leicht vernetzte Polyacrylate bzw. Polyacrylat-Copolymere und Stärke-Pfropfcopolymere. Besonders bevorzugte Polyacrylate sind charakterisiert durch ihre Struktur aus teilneutralisierter und schwach vernetzter Polyacrylsäure. Vorzugsweise beträgt die Neutralisation 70 bis 99 % der Carbonsäuregruppen in Form des Natriumsalzes.

Derartige Polyacrylate sind beispielsweise bekannt aus DE-A-37 16 945, DE-A-36 09 545 und EP-A-02 34 202.

Besonders bevorzugte Stärke-Pfropfcopolymere sind charakterisiert durch ihre Struktur mit Stärke als Pfropfgrundlage und teilneutralisierter, gegebenenfalls schwach vernetzter Polyacrylsäure als "Pfropfäste". Bei gängiger Herstellweise beinhalten solche Stärke-Pfropfcopolymeren auch Homopolymere aus teilneutralisierter und eventuell vernetzter Polyacrylsäure.

Derartige Stärke-Pfropfcopolymere sind beispielsweise bekannt aus DE-A-34 30 676, DE-A-36 13 309, US-A-3 661 815, EP-A-0 173 517 und EP-A-0 242 529.

Auf anderen Gebieten, wie z.B. in Hygiene-Produkten (Babywindeln, Inkontinenzwindeln), Land- und Gartenwirtschaft (Bodenverbesserung, Saataufzucht), industriellen Anwendungen (Tauinhibierung, Entwässerungsmittel, Taschenwärmer, Trockenbatterien, Spielzeug), ist der Einsatz von Superabsorbern bereits bekannt, wobei aber niemals ein Hinweis auf ihre Verwendung zusammen mit Celluloseethern erfolgt.

Für die Eignung der Superabsorber in erfindungsgemäßen Celluloseether-Zusammensetzungen ist die Korngröße von Bedeutung. Sie sollte vorzugsweise unter 100 μm liegen, um eine Störung des wäßrigen Systems durch Gelteilchen zu vermeiden. Aus diesem Grund sollte auch die Druckstabilität der gequollenen Teilchen möglichst niedrig sein.

Vorzugsweise haben die Superabsorber eine Korngröße von 50 bis 200 μm, insbesondere von 50 bis 100 μm. Selbstverständlich können statt eines einzigen Superabsorbers auch Gemische von Superabsorbern verwendet werden. Besonders bevorzugte Gemische sind aus vollsynthetischen und halbsynthetischen Superabsorbern zusammengesetzt, insbesondere aus vernetzten Polyacrylaten und Stärke-Polyacrylat-Pfropfcopolymeren.

In einer bevorzugten Ausführungsform ist der Superabsorber in einer Menge von 0,001 bis 60 Gew.-%, vorzugsweise 0,01 bis 10 Gew.-%, bezogen auf die gesamte Celluloseether-Zusammensetzung, vorhanden.

Als Celluloseether sind grundsätzlich alle Celluloseether geeignet, die wasserlöslich sind. Besonders bevorzugte Celluloseether sind Methylcellulose, Methylcellulosemischether, Carboxymethylcellulose, Hydroxyethyl- und Hydroxypropylcellulose. Statt eines einzelnen Celluloseethers können auch Celluloseether-Gemische verwendet werden, insbesondere Kombinationen von Carboxymethylcellulose mit Methylcellulose oder Methylcellulosemischethern und Kombinationen von Hydroxyethyl- oder Hydroxypropylcellulose mit anderen Celluloseethern.

Überraschenderweise sind mit den erfindungsgemäßen Celluloseether-Kombinationen Konfektionierungen in Tabletten-, Brikett-, Strang-, Platten- oder Pelletform ohne vorherige Granulierung möglich. Gegenüber dem Stand der Technik wird somit der wesentliche Fortschritt erzielt, mit einfachen Mitteln den aufwendigen und sich negativ auf die Lösezeit auswirkenden Granulierschritt zu sparen.

Zusätzlich können in der erfindungsgemäßen Celluloseether-Kombination übliche Hilfsstoffe enthalten sein, insbesondere Füllstoffe, Kunststoffdispersionspulver, Konservierungsmittel, Entschäumer, Luftporenbildner und Netzmittel.

Derartige Hilfsstoffe werden vorzugsweise in einer Menge von maximal 50 %, insbesondere bis 10 % eingesetzt.

Die erfindungsgemäßen Celluloseether-Zubereitungen sind insbesondere geeignet für Kleisterzubereitungen.

Es wurde nun gefunden, daß die erfindungsgemäßen Celluloseether-Zusammensetzungen bei der Anwendung als Tapetenkleister wesentliche Eigenschaften gegenüber dem Stand der Technik verbessern:
- Zweiseitigkeit,

- Offenzeitverlängerung,
- Nahtfestigkeit.

Die Zweiseitigkeit bezeichnet den nach dem Auseinanderfalten zusammengelegter, eingekleisterter Tapetenbahnen auf den Teilstücken verbliebenen Kleisterauftrag. Ideal ist eine 50:50 Verteilung, die bis jetzt von keinem Tapetenkleister erreicht wird. Im Regelfall liegt die Kleisterverteilung bei 70:30 bzw. 60:40. Mit Hilfe des Superabsorbers wird die Zweiseitigkeit in Richtung 50:50 verbessert.

Durch den Einsatz von Superabsorbern wird auch eine Offenzeitverlängerung bewirkt. Die Tapete bleibt länger verschiebbar. Weiterhin wird dadurch und durch die bessere Zweiseitigkeit eine Verbesserung der Nahtfestigkeit erreicht, d.h. es ist nicht notwendig, die Nahtbereiche vor- bzw. nachzukleistern. Die als Tapetenkleister verwendbaren, erfindungsgemäßen Celluloseether-Zusammensetzungen besitzen aufgrund des Superabsorberanteils, der reversibel Wasser speichern kann, zusätzliche besondere Eigenschaften:

- Der nach dem Trocknen entstandene Kleisterfilm besitzt klimaregulierende Eigenschaften. Durch Aufnahme von Wasserdampf wird hohe Luftfeuchtigkeit gesenkt. Bei niedriger Luftfeuchte wird die absorbierte Feuchtigkeit wieder freigesetzt.
- Der Superabsorber mit seinen Quelleigenschaften wirkt als Ablösehilfe, da er das vom Tapetenablöser angebotene Wasser schnell aufnimmt und den Kleisterfilm relativ rasch zum Ablösen aktiviert.

Die erfindungsgemäßen Celluloseether-Zusammensetzungen lassen sich auch vorteilhaft in der Tapetenrückseitenbeschichtung einsetzen. Von den beiden Arten der Tapetenrückseitenbeschichtung ist das sogenannte Staubverfahren von besonderer Bedeutung. Dabei wird die Papierbahn mit einer dünnen Kleisterlösung beschichtet und diese noch nasse, wäßrige Schicht mit Pulver (Staub) von MC, CMC oder Stärke bestreut. Auf die Gegenseite des beschichteten Papiers wird das Druckbild gedruckt und die Papierbahn in Nutzen geschnitten, beispielsweise einer Tapetenbreite von 53 cm. Zur Aktivierung der Kleisterschicht wird die Papierbahn durch Wasser gezogen und an die Wand geklebt. Für gewöhnlich liegen die Berührungszeiten bei 10 s, was aber oft zu kurz ist, da nicht genügend Wasser vom Kleister aufgenommen wird. Bei längerer Weichzeit besteht die Gefahr, daß das Wasser in die Papierbahn gelangt. Das führt zu Ungleichmäßigkeiten und zu optischen Störungen des Tapezierbildes. Gibt man der zu beflockenden MC, CMC, Stärke oder Mischungen daraus, Superabsorber bei, so wird innerhalb der Berührungszeit von 10 s genügend Wasser gebunden und zur Aktivierung des Kleisters bereitgestellt. Die mitunter kritische Verarbeitung der rückseitenbeschichteten Tapete wird stark vereinfacht bzw. problemlos gestaltet.

## Beispiele

Die in den folgenden Beispielen verwendeten Substanzen sind wie folgt charakterisiert:
1. Methylcellulose: Methylhydroxyethylcellulose mittlerer Substitutionsgrad ($-OCH_3$): ca. 1,4 mittlerer molarer Substitutionsgrad (EO): ca. 0,2 Viskosität (Rotovisko, MV II, 20° C, Ansatzverhältnis in Wasser 1:40): ca.8000 mPa.s

Superabsorber aus Natriumpolyacrylat: hergestellt gemäß Patentschrift DE-A-36 09 545, Beispiel Nr. 1
Wasseraufnahmekapazität: 400 g entionisiertes Wasser/g
Saugkraft: 48 g entionisiertes Wasser pro g
Wasseraufnahmegeschwindigkeit:
nach 30 s 9 g/g
nach 60 s 18 g/g
nach 120 s 33 g/g

## Beispiel 1

194 g eines Methylcellulose-Kleisters mit einer maximalen Korngröße von 200 μm wurden mit 6 g Superabsorber gemischt. Der Superabsorber aus Natriumpolyacrylat hatte eine maximale Korngröße von 100 μm. Diese Celluloseether-Zusammensetzung wurde in 8000 g Wasser derart gelöst, daß zunächst das Wasser mit einem Rührholz 5 sec lang in eine Bewegungsrichtung gebracht wurde und dann der Kleister unter weiterem Rühren 10 sec lang einge schüttet wurde. Nach weiteren 5 sec Rühren wurde die Rührrichtung geändert und 5 sec lang weitergerührt. Bei fünfmaliger Wiederholung dieses Versuchs bildete sich kein einziger Klumpen.

## Vergleichsbeispiel 1

200 g des Methylcellulose-Kleisters aus Beispiel 1 wurde, wie in Beispiel 1, in Wasser eingerührt. Dieser Versuch wurde fünfmal wiederholt. Es bildete sich im Mittel ein kleiner Klumpen aus Methylcellulose-Kleister.

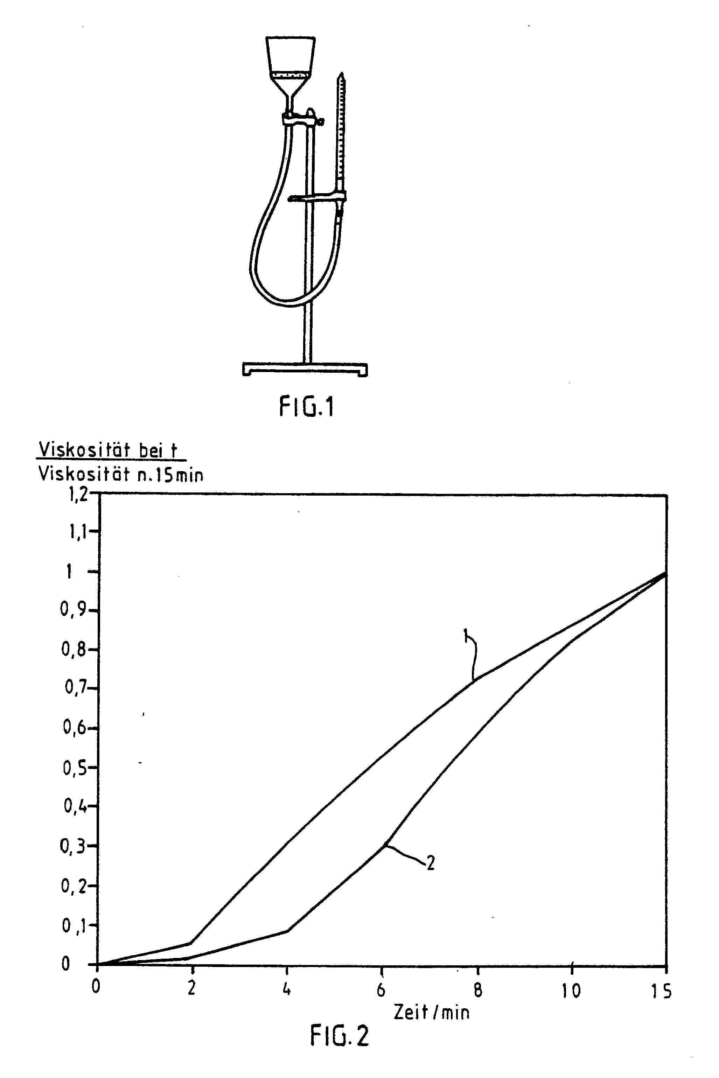

Mit dem in Beispiel 1 gefundenen verbesserten Auflösevorgang im Vergleich zum Vergleichsbeispiel 1 wurde auch eine höhere Anfangsviskosität in den ersten Minuten beobachtet, wenn Superabsorber in die Celluloseether-Zusammensetzung eingearbeitet ist (Abbildung 2, Kurve 1 im Vergleich zur Kurve 2).

Beispiel 2

20 g der im Beispiel 1 beschriebenen Celluloseether-Zusammensetzung wurde in eine Ringform mit 3 cm Innendurchmesser und 7 cm Außendurchmesser eingefüllt. Durch Anlegen eines Preßdruckes von 100 bzw. 150 bar wurde die Celluloseether-Zusammensetzung zusammengepreßt. Die so erhaltenen Ringe wurden auf die Wasseroberfläche von 800 g Wasser gelegt, wobei der Löseprozeß sofort in Gang kam. Nach 1 min wurde mit einem Rührholz umgerührt. Die Celluloseether-Zusammensetzung war nach dieser Zeit klumpenfrei dispergierbar.

Vergleichsbeispiel 2

20 g der in Vergleichsbeispiel 1 genannten Methylcellulose wurde, wie in Beispiel 2 beschrieben, in Ringformen überführt und diese mit Wasser in Kontakt gebracht. Der Ring war nach 1 min nur an der äußeren Oberfläche angelöst und die Celluloseether-Zusammensetzung ließ sich durch das Rühren nicht im Wasser dispergieren bzw. fein verteilen.

**Ansprüche**

1. Celluloseether-Zusammensetzung, dadurch gekennzeichnet, daß die Zusammensetzung wenigstens einen Celluloseether und wenigstens einen Superabsorber enthält.

2. Celluloseether-Zusammensetzung nach Anspruch 1, dadurch gekennzeichnet, daß der Superabsorber auf Basis von Polyacrylaten oder Stärke-Pfropfcopolymeren beruht.

3. Celluloseether-Zusammensetzung nach wenigstens einem der vorhergehenden Ansprüche, dadurch gekennzeichnet, daß der Superabsorber in einer Menge von 0,001 bis 60 Gew.-%, bezogen auf die gesamte Zusammensetzung, enthalten ist.

4. Celluloseether-Zusammensetzung nach wenigstens einem der vorhergehenden Ansprüche, dadurch gekennzeichnet, daß der Superabsorber aus Körnern einer Korngröße von im wesentlichen unter 100 $\mu$m besteht.

5. Celluloseether-Zusammensetzung nach wenigstens einem der vorhergehenden Ansprüche, dadurch gekennzeichnet, daß als Celluloseether Methylcellulose, Methylcellulosemischether, Carboxymethylcellulose, Hydroxyethylcellulose oder Hydroxypropylcellulose enthalten sind.

6. Celluloseether-Zusammensetzung nach wenigstens einem der vorhergehenden Ansprüche, dadurch gekennzeichnet, daß eine Kombination aus Carboxymethylcellulose mit Methylcellulose oder ein Methylcellulosemischether enthalten ist.

7. Celluloseether-Zusammensetzung nach wenigstens einem der vorhergehenden Ansprüche, dadurch gekennzeichnet, daß übliche Zusatzstoffe in einer Menge von maximal bis 50 %, bezogen auf die gesamte Zusammensetzung, enthalten sind.

8. Verwendung einer Celluloseether-Zusammensetzung gemäß wenigstens einem der vorhergehenden Ansprüche für Tapetenkleisterzubereitungen.

9. Verwendung einer Celluloseether-Zusammensetzung gemäß wenigstens einem der Ansprüche 1 bis 7 für den Bauwerkstoffbereich.

10. Verfahren zur Rückseitenbeschichtung von Tapeten mit einem Tapetenkleister, dadurch gekennzeichnet, daß als Tapetenkleister ein Kleister auf Basis einer Celluloseether-Zusammensetzung gemäß wenigstens einem der Ansprüche 1 bis 7 verwendet wird.

FIG.1

<u>Viskosität bei t</u>
Viskosität n.15min

Zeit / min

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 131 090   (THE DOW CHEMICAL CO.)<br>* Seite 2, Zeile 30 - Seite 3, Zeile 4; Seite 3, Zeilen 18-24, Zeile 33 - Seite 4, Zeile 3; Seite 4, Zeilen 14-26; Seite 5, Zeilen 4-10, Zeile 25 - Seite 6, Zeile 26; Seite 7, Zeilen 28-33; Seite 8, Zeilen 22-29; Ansprüche * | 1,3,5, 7-10 | C 08 L 1/26<br>C 09 J 101/26 |
| Y<br>D,Y | DE-A-3 609 545   (BASF AG)<br>* Anspruch 1 * | 2,4<br>2,4 | |
| A | GB-A-1 104 210   (MO OCH DOMSJO AB)<br>* Insgesamt * | | |
| A | DE-A-3 018 764   (HENKEL KGaA)<br>* Insgesamt * | | |
| A | WPIL, FILE SUPPLIER, AN = 89-058064, Derwent Publications Ltd, London, GB;<br>& JP-A-87 063 421 (KURARAY K.K.) 13-01-1989<br>* Zusammenfassung * | | |

RECHERCHIERTE SACHGEBIETE (Int. Cl.5)

C 08 L
C 09 J

Der vorliegende Recherchenbericht wurde für alle Patentansprüche erstellt

| Recherchenort | Abschlußdatum der Recherche | Prüfer |
|---|---|---|
| Den Haag | 15 November 90 | MAZET J.-F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument